# EUROPEAN PATENT SPECIFICATION

(11) **EP 3 081 780 B1**
(45) Date of publication and mention of the grant of the patent: **08.04.2020**
(21) Application number: 16165065.0
(22) Date of filing: 13.04.2016
(51) Int. Cl.: F02C 7/04, B64C 11/14, F02C 7/18, F02C 7/14, F01D 25/12

(54) **LUBRICANT CIRCULATION SYSTEM AND METHOD OF CIRCULATING LUBRICANT IN A GAS TURBINE ENGINE**
SCHMIERMITTELKREISLAUFSYSTEM UND VERFAHREN ZUR SCHMIERMITTELUMWÄLZUNG IN EINEM GASTURBINENMOTOR
SYSTÈME DE CIRCULATION DE LUBRIFIANT ET PROCÉDÉ PERMETTANT DE FAIRE CIRCULER UN LUBRIFIANT DANS UN MOTEUR À TURBINE À GAZ

(30) Priority: 13.04.2015 US 201514685240
(43) Date of publication of application: 19.10.2016
(73) Proprietor: United Technologies Corporation, Farmington, CT 06032 (US)
(72) Inventor: SUCIU, Gabriel L., Glastonbury, CT Connecticut 06033 (US); SHERIDAN, William G., Southington, CT Connecticut 06489 (US)
(74) Representative: Dehns

(56) References cited:
- EP-A1- 3 054 112
- US-A- 4 722 666
- US-A- 4 999 994
- US-A1- 2013 259 638

## Description

### TECHNICAL FIELD OF THE DISCLOSED EMBODIMENTS

The present disclosure is generally related to turbine engines, in particular to a lubricant circulating system and a method of circulating lubricant in a gas turbine engine.

### BACKGROUND OF THE DISCLOSED EMBODIMENTS

Gas turbine engines include bearing assemblies to support the rotating shafts of the engine. During operation, the bearing assemblies experience high thermal loads that may be controlled with a thermal management system. A thermal management system utilizes a heat exchanger to cool fluids such as oil flowing to and from bearing assemblies or other engine components. A thermal management system enhances durability and provides efficient operation of bearing assemblies and other engine components. However, thermal management systems often include a complex network of airflow circulation pathways and fluid lines to effectively cool the high temperature fluid. In some gas turbine engines, incorporation of a thermal management system is challenging.

Therefore, a need exists in the art for a thermal management system for a gas turbine engine having enhanced efficiency and applicability.

US 4722666 shows an engine nose cowl that includes a gear box oiling system. The gear box oiling system includes: an air pump to provide cold side fluid to a heat exchanger, an oil sump, an oil pump, an oil filter and an oil tank.

### SUMMARY OF THE DISCLOSED EMBODIMENTS

In an embodiment, a lubricant circulation system for a gas turbine engine is disclosed comprising a nose cone having an aperture communicating air to an interior space of the nose cone, a heat exchanger disposed in the interior space, an air pump at least partially disposed within the nose cone and configured to communicate air through the heat exchanger and a lubricant circulation pathway contained within a forward portion of the gas turbine engine and configured to circulate lubricant through the heat exchanger, the lubrication circulation pathway including: a scavenge line; a lubricant pump, wherein the scavenge line supplies lubricant to the lubricant pump; a lubricant filter, wherein lubricant is circulated from the lubricant pump to the lubricant filter before circulating lubricant to the heat exchanger; a lubricant distribution manifold configured to be at a forward end of a geared architecture that includes a front bearing assembly and a middle bearing assembly, wherein lubricant is circulated from the heat exchanger to the lubricant distribution manifold, and wherein the distribution manifold delivers lubricant to the geared architecture; and a lubricant reservoir, wherein the lubricant from the geared architecture collects in the lubricant reservoir.

In a further embodiment of the above, the system further comprises a front bearing compartment configured to be at the forward portion of the gas turbine engine, wherein the lubricant circulation pathway is configured to circulate lubricant between the front bearing compartment and the heat exchanger. In a further embodiment of any of the above, the air pump is further configured to communicate air around the forward portion of the gas turbine engine. In a further embodiment of any of the above, the air pump is driven by a low shaft to communicate air through the aperture. In a further embodiment of any of the above, the air pump is driven through a planetary gear box coupled to the low shaft. In a further embodiment of any of the above, wherein the lubricant pump is driven by a rotation of the air pump.

In another embodiment, a method of circulating lubricant in a gas turbine engine is disclosed comprising providing a nose cone having an aperture and an interior space; providing a heat exchanger in the interior space; providing an air pump at least partially disposed within the nose cone that is configured to communicate air through the heat exchanger; providing a lubricant circulation pathway contained within a forward portion of the gas turbine engine that is configured to circulate lubricant through the heat exchanger, the lubricant circulation pathway including: a scavenge line; a lubricant pump, wherein the scavenge line supplies lubricant to the lubricant pump; a lubricant filter, wherein lubricant is circulated from the lubricant pump to the lubricant filter before lubricant is circulated to the heat exchanger; a lubricant distribution manifold at a forward end of a geared architecture that includes a front bearing assembly and a middle bearing assembly, wherein lubricant is circulated from the heat exchanger to the lubricant distribution manifold, and wherein the distribution manifold delivers lubricant to the geared architecture; and a lubricant reservoir, wherein the lubricant from the geared architecture collects in the lubricant reservoir; communicating air to the interior space of the nose cone through the aperture; and circulating lubricant through a lubricant circulation pathway between the heat exchanger and the lubricant reservoir.

In a further embodiment of any of the above, the method further comprises providing a front bearing compartment at the forward portion of the gas turbine engine, and circulating lubricant in the lubricant circulation pathway between the front bearing compartment and the heat exchanger. In a further embodiment of any of the above, the method further comprises pumping lubricant through the lubricant circulation pathway with the lubricant pump. In a further embodiment of any of the above, the method further comprises providing a low shaft in the gas turbine engine, and driving the lubricant pump with the low shaft. In a further embodiment of any of the above, the method further comprises providing a breather vent at the forward portion of the gas turbine engine, and venting air from the forward portion out of the gas turbine engine. In a further embodiment of any of the above, the method further comprises pumping air through the heat exchanger with the air pump. In a further embodiment of any of the above, the method further comprises pumping air around the forward portion of the gas turbine engine with the air pump. In a further embodiment of any of the above, the method further comprises driving the air pump with an engine shaft to communicate air through the aperture. In a further embodiment of any of the above, the method further comprises driving the air pump through a planetary gear box coupled to the engine shaft. In a further embodiment of any of the above, the method further comprises driving the lubricant pump with the air pump.

### BRIEF DESCRIPTION OF THE DRAWINGS

The embodiments and other features, advantages and disclosures contained herein, and the manner of attaining them, will become apparent and the present disclosure will be better understood by reference to the following description of various exemplary embodiments of the present disclosure taken in conjunction with the accompanying drawings, wherein:
FIG. 1 is a sectional view of one example of a gas turbine engine in which the presently disclosed embodiments may be used;
FIG. 2 is a partial cross sectional view of a gas turbine engine in one embodiment;
FIG. 3 is a partial cross sectional view of a gas turbine engine in one embodiment;
FIG. 4 is a partial cross sectional view of a gas turbine engine in one embodiment;
FIG. 5 is a partial cross sectional view of a gas turbine engine in one embodiment; and
FIG. 6 illustrates a method of circulating lubricant in a gas turbine engine in one embodiment,

### DETAILED DESCRIPTION OF THE DISCLOSED EMBODIMENTS

For the purposes of promoting an understanding of the principles of the disclosure, reference will now be made to certain embodiments and specific language will be used to describe the same. It will nevertheless be understood that no limitation of the scope of the disclosure is thereby intended, and alterations and modifications in the illustrated device, and further applications of the principles of the disclosure as illustrated therein are herein contemplated as would normally occur to one skilled in the art to which the disclosure relates.

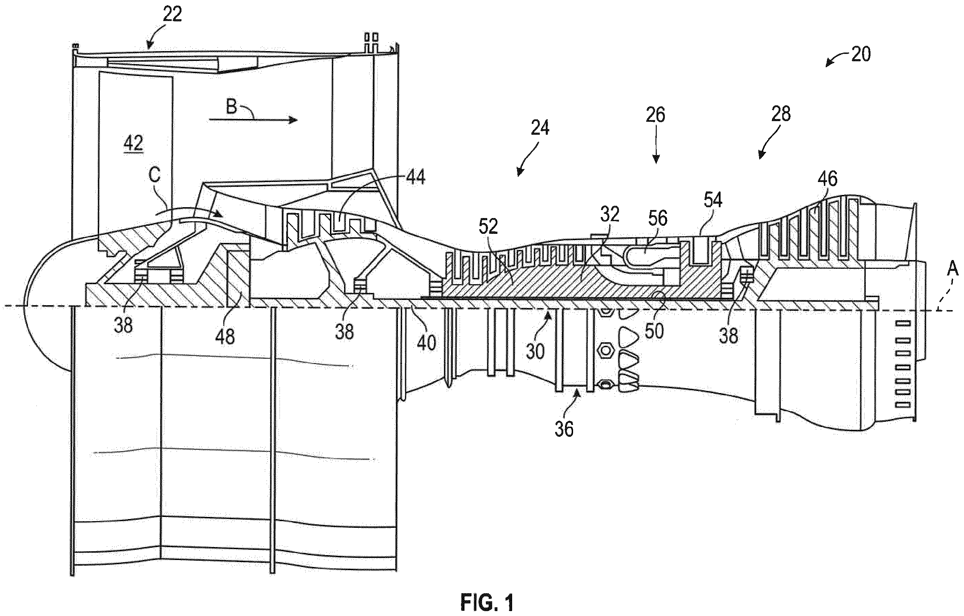

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle, The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight conditiontypically cruise at about 0.8 Mach and about 35,000 feet (10,688 meters). The flight condition of 0.8 Mach and 35,000 ft (10,688 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point, "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second (350.5 m/sec).

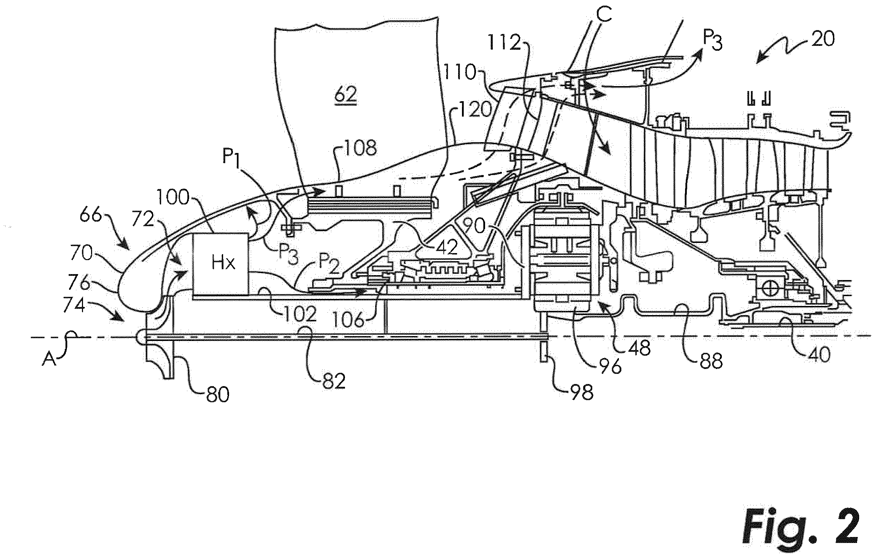

Referring now to FIG. 2, the fan rotor 42 of the gas turbine engine 20 includes a plurality of fan blades 62 extending radially from the axis A. The example gas turbine engine 20 also includes a nose cone 66. In this example, the nose cone 66 extends axially forward from the fan blades 62. This nose cone 66 is sometimes referred to as a spinner.

The nose cone 66, in this example, establishes the forwardmost portion of the gas turbine engine 20. The nose cone 66 directs and streamlines flow entering the gas turbine engine 20. An outer surface 70 of the nose cone 66 establishes a portion of a radially inner boundary of a flowpath for flow entering the engine 20. The nose cone 66 may include one piece or several individual pieces.

The nose cone 66 has an interior 72. The nose cone 66 provides an aperture 74 that communicates flow to the interior 72. The aperture 74 may be positioned at a front 76 of the nose cone 66 as shown, or in some other position aft the front 76 of the nose cone 66. The example aperture 74 and the nose cone 66 are coaxially aligned at the axis A. Other alignments of the aperture 74 are possible. A line-of-site blockage structure may be incorporated to protect the system from birdstrike damage.

In this example, a pump, such as an impeller 80, is used to increase the amount of air entering the interior. The impeller 80 is positioned at least partially within the interior 72 of the nose cone 66. The impeller 80 is driven by rotation during operation. Other example pumps may include an axial fan.

Air can enter the interior 72 through aperture 74 when the exit pressure at the bypass duct inner diameter discharge location can be suppressed below that of the inlet to the nose cone 66. This can occur when the engine 20 is not moving forward, but still turning, like at ground idle.

During operation, the example impeller 80 is rotated by a shaft 82, which is rotated by a shaft 88. The example shaft 88 is a flex coupling shaft. The shaft 88 is driven by the inner shaft 40 of the low-speed spool 30 (FIG. 1). Rotating the shaft 88 rotates a sun gear 96 of the geared architecture 48, which then rotates a gear 98 to rotate the shaft 82.

The example engine 20 includes a heat exchanger 100 positioned near the nose cone 66. In this example, at least a portion of the heat exchanger 100 is forward of the fan blades 62. Air that has entered the interior 72 through the aperture 74 is moved through the heat exchanger 100 to provide a cold side fluid.

The example heat exchanger 100 is a fin and tube type heat exchanger 100, although other type of heat exchangers may also be used. The heat exchanger 100 is annular and distributed about the axis A. In another example, several separate heat exchangers are distributed about the axis A, A support 102 extending axially from a stationary carrier 90 of the geared architecture 48 supports the heat exchanger 100 in this example. The support 102 may also support conduits (not shown) carrying lubricant to the heat exchanger 100.

Air that has entered the interior 72 of the nose cone 66 is pressurized relative to the air outside the nose cone 66. In one example, the difference in pressure between the air within the interior 72 of the nose cone 66 and the air outside the nose cone 66 ranges from 0.5 to 10 psi (3.45 kPa to 68.95 kPa).

Air that has entered the interior 72 of the nose cone 66 is raised to a higher temperature relative to the air outside the nose cone 66. In one example, the difference in temperature between the air within the interior 72 of the nose cone 66 and the air outside of the nose cone 66 ranges from 100° F. to 200° F. (37.78° C. to 93.33° C.).

Lubricant, such as oil from the engine 20, provides the warm side fluid for the heat exchanger 100. Air that has entered the interior 72 is moved through the heat exchanger 100 to remove thermal energy from the lubricant.

The lubricant may be a mixture of lubricant from several areas of the gas turbine engine 20, or may be lubricant from a subset of a lubrication system of the engine 20, such as a fan drive gear system lubrication system. Although the air that has entered the interior 72 is increased in temperature relative to the air outside the nose cone 66, the air that has entered the interior 72 is still significantly cooler than the lubricant within the heat exchanger 100 and therefore can still remove heat from it.

In this example, the heat exchanger 100 is configured to reject at least 2,900 BTU/min at idle and 5,000 BTU/min and take-off.

Some of the air that has moved through the heat exchanger 100 moves along path P1 and contacts an interior facing side of the nose cone 66. This air adds thermal energy to the nose cone 66, which inhibits ice formation. As appreciated, air moving along path P1 includes more thermal energy than the air moving into the heat exchanger 100 because air that has moved through the heat exchanger 100 has absorbed thermal energy from the lubricant moving through the heat exchanger 100.

Some of the air that has moved through the heat exchanger 100 moves along path P2 and buffers a carbon seal 106 within bearings 38 of the gas turbine engine 20. The carbon seal 106 is a forward carbon seal of the front bearing compartment of the engine 20 in this particular case. The seal 106, in this example, is biased axially rearward by the air.

Most, if not all, of the air that has moved through the heat exchanger 100 eventually moves along path P3. A portion of the path P3 extends radially inward the fan blade platform 108. If additional flow area is needed to permit the required flow rate, additional apertures may be included through the Fan Blade Hub Web, which is the same part as the fan rotor 42 in this example, just at a radially inboard. The path P3 also extends through an inlet guide vane 110 and a front center body strut 112. The inlet guide vane 110 and the front center body 112 include internal passages and extend radially across the core flowpath C of the engine 20. The path P3 terminates at the bypass flowpath B of the gas turbine engine 20 behind the FEGV (fan exit guide vanes). Thus, air that has entered the interior 72 through the aperture 74 is eventually expelled into the bypass flowpath B at an axial location having a static pressure that is low enough to enable sufficient flow through the heat exchanger 100.

In addition to the nose cone 66, the air that has moved through the heat exchanger 100 also adds thermal energy to inhibit ice formation on other structures, such as the fan blade platform 108, the inlet guide vane 110, and the front center body struts 112.

In this example, a seal structure 120 seals the interface between the fan rotor 42 and a stationary structure of the gas turbine engine 20. The seal structure 120 limits flow escaping from the path P3, or interior 72, to a position directly aft the fan blade 62. Such leakage into this area may undesirably introduce turbulence to the flow entering the core flowpath C of the gas turbine engine 20.

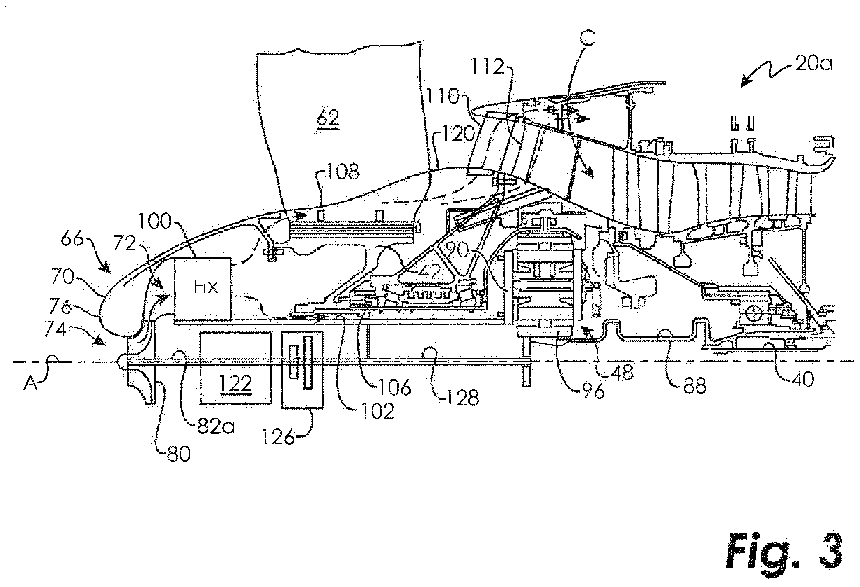

Referring to FIG. 3, in another example engine 20*a*, the impeller 80 is selectively driven by an electric motor 122, which allows relatively infinite adjustments of the rotational speed of the impeller 80. The motor 122 may be used to rotate the impeller 80 when the engine 20 is on the ground, at idle, or at the top of descent. When the motor 122 is not in use, the impeller 80 may be driven using the shaft 88.

In this example, a clutch 126 is moved between an engaged position and a disengaged position to selectively drive the impeller 80 using the electric motor 122 or using the shaft 88. The clutch 126 is an Air Turbine Starter (ATS)-type ratchet clutch in this example.

In the engaged position, the clutch 126 couples together the shaft 128 to a shaft 82*a* such that rotation of the shaft 128 rotates the shaft 82*a*. The shaft 82*a* is directly connected to the impeller 80. That is, rotating the shaft 82*a* rotates the impeller 80.

The shaft 128 is rotated by the sun gear 96 of the geared architecture 48, which is rotated by the shaft 88. The motor 122 is not driving the shaft 82*a* when the clutch 126 is engaged. When the motor 122 is running, and driving the impeller 80, the clutch 126 disengages such that the shaft 82*a* is free to be rotated by the electric motor 122 relative to the shaft 128. In FIG. 3, the clutch 126 is shown in a disengaged position, which corresponds to the electric motor 122 driving the impeller 80.

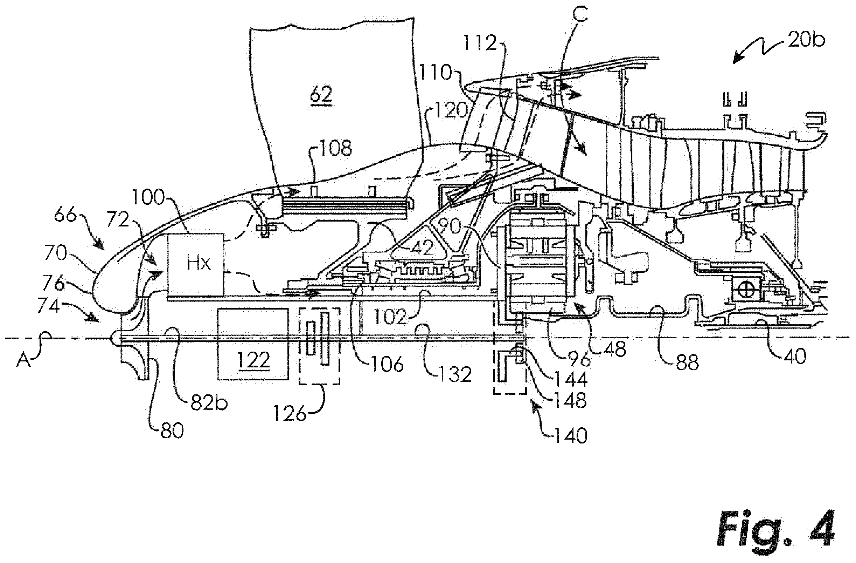

Referring to FIG. 4, in yet another example engine 20 b, the impeller is selectively rotated by the motor 122 or the shaft 132, again selected by a clutch 126. However, in this example, a geared architecture 140 is used to alter the rotational speed of the shaft 132 relative to the shaft 88. In this example, the shaft 88 rotates the sun gear 96 to rotate the geared architecture 140. The geared architecture 140, in turn, rotates the shaft 132 which rotates a shaft 82b that rotates the impeller 80 when the clutch 126 is in the engaged position.

In this example, the stationary carrier 90 of the geared architecture 48 includes extensions 144 that support gears 148 of the geared architecture 140. The gears 148 are planetary gears in this example. Rotating the geared architecture 140 rotates the shaft 82 to drive the impeller 80. The geared architecture 140, in this example, has a gear ratio of about five (5 to 1). That is, when the shaft 88 is used to rotate the impeller 80, one rotation of the shaft 88 rotates the shaft 82 (and the impeller 80) five times.

When the impeller 80 is not rotated by the shaft 88, the impeller 80 is driven by the electric motor 122. The clutch 126 controls the selective rotation of the impeller 80 using the electric motor 122 or shaft 88.

Utilizing the geared architecture 140 enables the impeller 80 to rotate at a faster speed than the shaft 88 when the clutch 126 is engaged. In one example, the gear ratio of the geared architecture 140 is about five (5 to 1). That is, one rotation of the shaft 88 rotates the impeller 80 five times.

Features of the disclosed examples include a thermal management strategy that provides increased space within a core engine nacelle. Another feature is providing thermal energy to limit ice formation on various components at a front of an engine without using a dedicated flow of bleed air from other areas of the engine. Yet another feature is increasing Line Replaceable Unit (LRU) capability since the heat exchanger is located in the nose cone. LRU refers to components external to the engine core (pumps, heat exchangers, etc.) that are relatively easy to change out if they become damaged. Still another feature is greater flexibility to adjust nacelle contours around an engine, which provides a potential performance benefit.

Engine heat loads are typically handled via a combination of fuel/oil and air/oil coolers in the prior art. And although heat loads are typically lower at idle and near idle conditions, the associated lower fuel flow rate at these conditions significantly lessens the ability of the fuel/oil coolers to reject heat. The specific features of the embodiments shown in FIGS. 3 and 4, specifically the TMS pump being rotated by a motor or a dedicated gear set at much higher speeds than could be accomplished by directly driving the pump with a turbine shaft, thus compensate for the natural drop-off in heat rejection capability in prior art configurations at idle and near-idle conditions.

Rotating the pump via the planetary gear system as shown in the FIG. 4 embodiments allows the pump to rotate faster than the shaft rotated by the turbine. In this manner the disclosed examples effectively replace three systems (spinner anti-ice, front bearing compartment buffering, and TMS cooling).

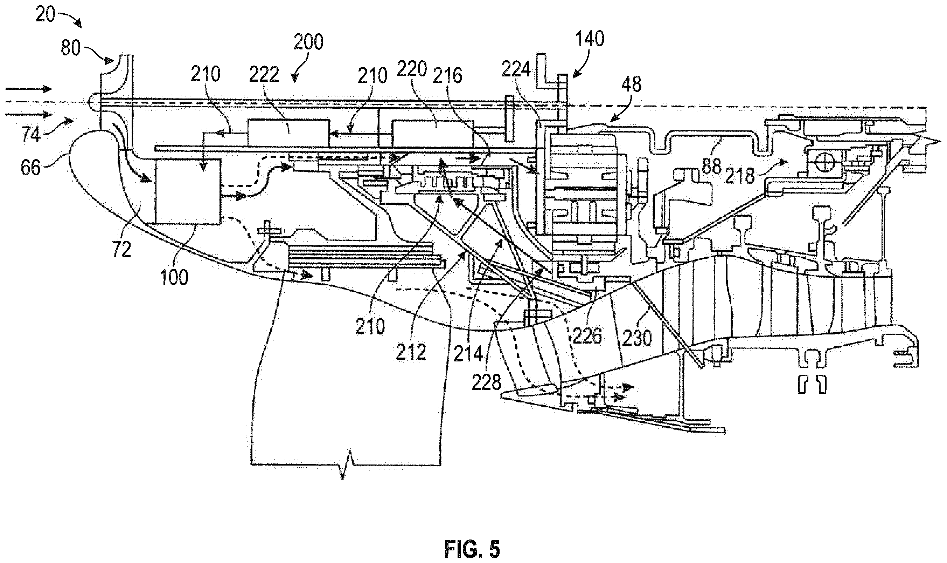

Referring now to FIG. 5, a lubricant circulation system 200 of the gas turbine engine 20 is illustrated. The lubricant circulation system 200 may be incorporated into any of the embodiments of the gas turbine engines 20, 20a, 20b disclosed herein. The lubricant circulation system 200 includes the nose cone 66 having the aperture 74 communicating air to the interior space 72 of the nose cone 66, the heat exchanger 100 disposed in the interior space 72, and a lubricant circulation pathway 210 contained within a forward portion 212 of the gas turbine engine 20. The lubricant circulation pathway 210 is configured to circulate lubricant, such as oil, through the heat exchanger 100. The forward portion 212 includes a front bearing compartment 214 housing a front bearing assembly 216. The front bearing compartment 214 in one or more embodiments may be referred to as the #1 bearing compartment or the forwardmost bearing compartment. The lubricant circulation pathway 210 is configured to circulate lubricant between the front bearing compartment 214 and the heat exchanger 100. The front bearing compartment 214 of one embodiment houses the front bearing assembly 216, the geared architecture 48, and a middle bearing assembly 218 at the forward portion 212 of the engine 20.

The lubricant circulation system 200 of one or more embodiments includes a lubricant pump 220 and a lubricant filter 222 in the lubricant circulation pathway 210. The system 200 of FIG. 5 includes an air pump 80 at least partially disposed within the nose cone 66 and configured to communicate air through the heat exchanger 100. The air pump 80 may include any embodiment described above. The air pump 80 is configured to communicate air around the forward portion 212 of the gas turbine engine 20. The air pump 80 is driven by the shaft 88, including a low shaft, to communicate air through the aperture 74 in one embodiment. The air pump 80 may be driven through the geared architecture 48, including a planetary gear set, coupled to the shaft 88. The ring gear of the geared architecture 48, as shown in FIG. 5, may drive the air pump 80. The geared architecture 140 shown in FIG. 4 may be utilized to drive the air pump 80. The lubricant pump 220 of one embodiment is driven by a rotation of the air pump 80. The air pump 80 or the lubricant pump 220 may be driven by any drive or control means described in the present disclosure.

In the embodiment shown in FIG. 5, the lubricant circulation pathway 210 includes a scavenge line 228 supplying lubricant to the lubricant pump 220. Lubricant is then circulated from the lubricant pump 220 to the lubricant filter 222 before circulating to the heat exchanger 100, where heat is removed from the lubricant, including with the aid of the air pump 80. The filtered and cooled lubricant is then circulated to a lubricant distribution manifold 224 at a forward end of the geared architecture 48. The lubricant distribution manifold 224 delivers lubricant to the geared architecture 48 and bearings 216, 218. The lubricant collects in a lubricant reservoir 226 within the forward portion 212 of the engine 20. In one embodiment, a breather vent 230 is disposed at the forward portion 212 to vent air from the forward portion 212 out of the gas turbine engine 20. The breather vent 230 may also be utilized for adding lubricant to the reservoir 226 during service operations. Although shown on a lower half of the engine 20 in FIG. 5 for illustrative purposes, the vent 230 may be located at an upper half of the engine 20.

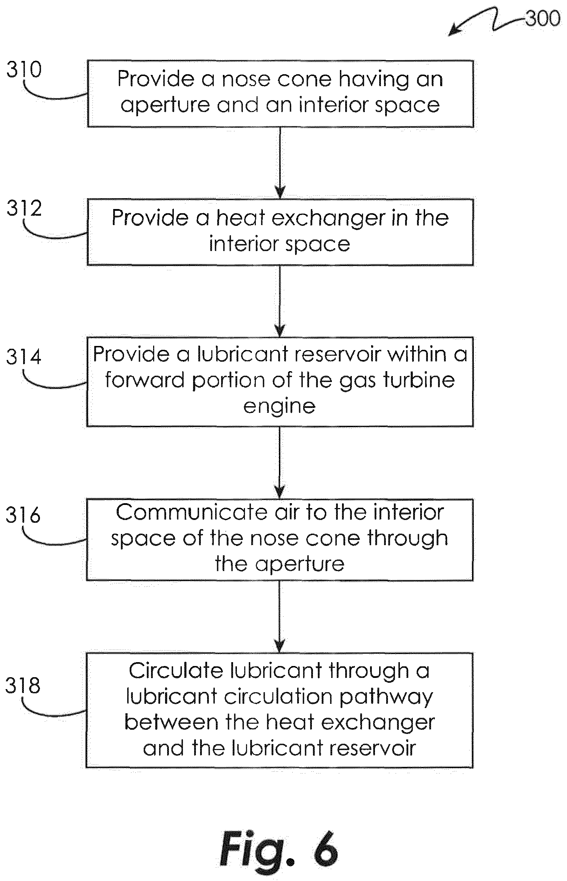

Referring now to FIG. 6, a method 300 of circulating lubricant in the gas turbine engine 20 is disclosed. The method 300 includes providing, at step 310, the nose cone 66 having the aperture 74 and the interior space 72, providing, at step 312, the heat exchanger 100 in the interior space 72, and providing, at step 314, the lubricant reservoir 226 within the forward portion 212 of the gas turbine engine 20. The method 300 further includes communicating, at step 316, air to the interior space 74 of the nose cone 66 through the aperture 74 and circulating, at step 318, lubricant through the lubricant circulation pathway 210 between the heat exchanger 100 and the lubricant reservoir 226.

The method 300 of one or more embodiments further includes circulating lubricant in the lubricant circulation pathway 210 between the front bearing compartment 214 and the heat exchanger 100, pumping lubricant through the lubricant circulation pathway 210 with the lubricant pump 220, or driving the lubricant pump 220 with the shaft 88. The method 300 further includes circulating lubricant through the lubricant filter 222. The method 300 may further include providing the breather vent 230 at the forward portion 212 of the gas turbine engine 20, or venting air from the forward portion 212 out of the gas turbine engine 20. The method 300 may further include pumping air through the heat exchanger 100 with the air pump 80, pumping air around the forward portion 212 of the gas turbine engine 20 with the air pump 80, or driving the air pump 80 with a shaft 88, such as a low shaft, to communicate air through the aperture. The air pump may be driven through a planetary gear box coupled to the shaft 88. The lubricant pump 220 may be driven by the air pump 80.

The system 200 and method 300 of the present disclosure illustrates a self-contained system and method for pumping, filtering, cooling, distributing, and/or storing lubricant at the forward portion 212 of the engine 20. The system 200 and method 300 greatly improves current engine oil systems by significantly reducing the number of supply conduits and externally mounted filters and coolers and eliminating the need for an oil tank. All servicing may be handled by removing the nose cone and removing the lubrication system components described above from the static structural support.

While the invention has been illustrated and described in detail in the drawings and foregoing description, the same is to be considered as illustrative and not restrictive in character, it being understood that only certain embodiments have been shown and described and that all changes and modifications that come within the scope of the invention as defined by the appended claims are desired to be protected.

## Claims

1. A lubricant circulation system (200) for a gas turbine engine (20) comprising:
a nose cone (66) having an aperture (74) communicating air to an interior space (72) of the nose cone;
a heat exchanger (100) disposed in the interior space;
an air pump (80) at least partially disposed within the nose cone and configured to communicate air through the heat exchanger; and
a lubricant circulation pathway (210) suitable to be contained within a forward portion (212) of the gas turbine engine and configured to circulate lubricant through the heat exchanger, the lubrication circulation pathway including:
a scavenge line (228);
a lubricant pump (220), wherein the scavenge line supplies lubricant to the lubricant pump;
a lubricant filter (222), wherein lubricant is circulated from the lubricant pump to the lubricant filter before circulating lubricant to the heat exchanger;
a lubricant distribution manifold (224) configured to be at a forward end of a geared architecture (48) that includes a front bearing assembly (216) and a middle bearing assembly (218), wherein lubricant is circulated directly from the heat exchanger to the lubricant distribution manifold, and wherein the distribution manifold delivers lubricant to the geared architecture; and
a lubricant reservoir (226), wherein, when in use, the lubricant from the geared architecture collects in the lubricant reservoir.

2. The system of claim 1, further comprising a front bearing compartment (214) configured to be at the forward portion of the gas turbine engine, wherein the lubricant circulation pathway is configured to circulate lubricant between the front bearing compartment and the heat exchanger.

3. The system of claim 1 or 2, wherein the air pump (80) is further configured to communicate air around the forward portion of the gas turbine engine.

4. The system of claim 1 or 2, wherein the air pump (80) is configured to be driven by a low shaft (82) to communicate air through the aperture.

5. The system of claim 4, wherein the air pump (80) is configured to be driven through a planetary gear box coupled to the low shaft, and wherein the lubricant pump (22) is driven by a rotation of the air pump.

6. A method (300) of circulating lubricant in a gas turbine engine (20) comprising:
providing (310) a nose cone (66) having an aperture (74) and an interior space (72);
providing (312) a heat exchanger (100) in the interior space;
providing an air pump (80) at least partially disposed within the nose cone that is configured to communicate air through the heat exchanger;
providing a lubricant circulation pathway (210) contained within a forward portion (212) of the gas turbine engine that is configured to circulate lubricant through the heat exchanger, the lubricant circulation pathway including:
a scavenge line (228);
a lubricant pump (220), wherein the scavenge line supplies lubricant to the lubricant pump;
a lubricant filter (222), wherein lubricant is circulated from the lubricant pump to the lubricant filter before lubricant is circulated to the heat exchanger;
a lubricant distribution manifold (224) at a forward end of a geared architecture (48) that includes a front bearing assembly (216) and a middle bearing assembly (218), wherein lubricant is circulated from the heat exchanger directly to the lubricant distribution manifold, and wherein the distribution manifold delivers lubricant to the geared architecture; and
a lubricant reservoir (226), wherein the lubricant from the geared architecture collects in the lubricant reservoir;
communicating (316) air to the interior space of the nose cone through the aperture; and
circulating (318) lubricant through a lubricant circulation pathway (210) between the heat exchanger (100) and the lubricant reservoir (226).

7. The method of claim 6, further comprising:
providing a front bearing compartment (214) at the forward portion of the gas turbine engine; and
circulating lubricant in the lubricant circulation pathway (210) between the front bearing compartment and the heat exchanger (100).

8. The method of claim 6 or 7, further comprising:
pumping lubricant through the lubricant circulation pathway (210) with the lubricant pump (220), preferably further comprising:
providing a low shaft (82) in the gas turbine engine (20); and
driving the lubricant pump with the low shaft.

9. The method of any of claims 6 to 8, further comprising:
providing a breather vent (230) at the forward portion of the gas turbine engine (20); and
venting air from the forward portion out of the gas turbine engine.

10. The method of any of claims 6 to 9, further comprising:
pumping air through the heat exchanger (100) with the air pump (80).

11. The method of any of claims 6 to 10, further comprising pumping air around the forward portion of the gas turbine engine (20) with the air pump (80).

12. The method of claim 11 further comprising driving the air pump (80) with an engine shaft (82; 88) to communicate air through the aperture (74).

13. The method of claim 12, further comprising driving the air pump (80) through a planetary gear box coupled to the engine shaft (82; 88), preferably further comprising:
driving the lubricant pump (220) with the air pump.

## Patentansprüche

1. Schmiermittelkreislaufsystem (200) für einen Gasturbinenmotor (20), umfassend:
einen Bogkonus (66), der einen Durchbruch (74) aufweist, der Luft zu einem Innenraum (72) des Bogkonus überträgt;
einen Wärmetauscher (100), der in dem Innenraum angeordnet ist;
eine Luftpumpe (80), die zumindest teilweise in dem Bogkonus angeordnet und konfiguriert ist, um Luft durch den Wärmetauscher zu übertragen; und
einen Schmiermittelkreislaufdurchgang (210), der geeignet ist, um in einem vorderen Abschnitt (212) des Gasturbinenmotors enthalten zu sein, und konfiguriert ist, um ein Schmiermittel durch den Wärmetauscher umzuwälzen, wobei der Schmiermittelkreislaufdurchgang Folgendes beinhaltet:
eine Rückleitung (228);
eine Schmiermittelpumpe (220), wobei die Rückleitung der Schmiermittelpumpe das Schmiermittel zuführt;
einen Schmiermittelfilter (222), wobei das Schmiermittel von der Schmiermittelpumpe zu dem Schmiermittelfilter umgewälzt wird, bevor das Schmiermittel zu dem Wärmetauscher umgewälzt wird;
eine Schmiermittelverteilungsrohrverzweigung (224), die konfiguriert ist, um sich an einem vorderen Ende einer ausgerichteten Architektur (48) zu befinden, die eine vordere Lageranordnung (216) und eine mittlere Lageranordnung (218) beinhaltet, wobei das Schmiermittel direkt von dem Wärmetauscher zu der Schmiermittelverteilungsrohrverzweigung umgewälzt wird und wobei die Verteilungsrohrverzweigung der ausgerichteten Architektur das Schmiermittel zuführt; und
einen Schmiermittelbehälter (226), wobei im Gebrauch sich das Schmiermittel aus der ausgerichteten Architektur in dem Schmiermittelbehälter sammelt.

2. System nach Anspruch 1, ferner umfassend eine vordere Lagerkammer (214), die konfiguriert ist, um sich an dem vorderen Abschnitt des Gasturbinenmotors zu befinden, wobei der Schmiermittelkreislaufdurchgang konfiguriert ist, um das Schmiermittel zwischen der vorderen Lagerkammer und dem Wärmetauscher umzuwälzen.

3. System nach Anspruch 1 oder 2, wobei die Luftpumpe (80) ferner konfiguriert ist, um Luft um den vorderen Abschnitt des Gasturbinenmotors zu übertragen.

4. System nach Anspruch 1 oder 2, wobei die Luftpumpe (80) konfiguriert ist, um durch eine niedrige Welle (82) angetrieben zu werden, um Luft durch den Durchbruch zu übertragen.

5. System nach Anspruch 4, wobei die Luftpumpe (80) konfiguriert ist, um durch ein Planetenradgetriebe angetrieben zu werden, das an die niedrige Welle gekoppelt ist, und wobei die Schmiermittelpumpe (22) durch eine Drehung der Luftpumpe angetrieben wird.

6. Verfahren (300) zur Schmiermittelumwälzung in einem Gasturbinenmotor (20), umfassend:
Bereitstellen (310) eines Bogenkonus (66), der einen Durchbruch (74) und einen Innenraum (72) aufweist;
Bereitstellen (312) eines Wärmetauschers (100) in dem Innenraum;
Bereitstellen einer Luftpumpe (80), die zumindest teilweise in dem Bogenkonus angeordnet ist, der konfiguriert ist, um Luft durch den Wärmetauscher zu übertragen;
Bereitstellen eines Schmiermittelkreislaufdurchgangs (210), der in einem vorderen Abschnitt (212) des Gasturbinenmotors enthalten und der konfiguriert ist, um ein Schmiermittel durch den Wärmetauscher umzuwälzen, wobei der Schmiermittelkreislaufdurchgang Folgendes beinhaltet:
eine Rückleitung (228);
eine Schmiermittelpumpe (220), wobei die Rückleitung der Schmiermittelpumpe das Schmiermittel zuführt;
einen Schmiermittelfilter (222), wobei das Schmiermittel von der Schmiermittelpumpe zu dem Schmiermittelfilter umgewälzt wird, bevor das Schmiermittel zu dem Wärmetauscher umgewälzt wird;
eine Schmiermittelverteilungsrohrverzweigung (224) an einem vorderen Ende einer ausgerichteten Architektur (48), die eine vordere Lageranordnung (216) und eine mittlere Lageranordnung (218) beinhaltet, wobei das Schmiermittel direkt von dem Wärmetauscher zu der Schmiermittelverteilungsrohrverzweigung umgewälzt wird und wobei die Verteilungsrohrverzweigung der ausgerichteten Architektur das Schmiermittel zuführt; und
einen Schmiermittelbehälter (226), wobei sich das Schmiermittel aus der ausgerichteten Architektur in dem Schmiermittelbehälter sammelt;
Übertragen (316) von Luft zu dem Innenraum des Bogenkonus durch den Durchbruch; und
Umwälzen (318) des Schmiermittels durch einen Schmiermittelkreislaufdurchgang (210) zwischen dem Wärmetauscher (100) und dem Schmiermittelbehälter (226).

7. Verfahren nach Anspruch 6, ferner umfassend:
Bereitstellen einer vorderen Lagerkammer (214) an dem vorderen Abschnitt des Gasturbinenmotors; und
Umwälzen des Schmiermittels in dem Schmiermittelkreislaufdurchgang (210) zwischen der vorderen Lagerkammer und dem Wärmetauscher (100).

8. Verfahren nach Anspruch 6 oder 7, ferner umfassend:
Pumpen des Schmiermittels mit der Schmiermittelpumpe (220) durch den Schmiermittelkreislaufdurchgang (210), vorzugsweise ferner umfassend:
Bereitstellen einer niedrigen Welle (82) in dem Gasturbinenmotor (20); und
Antreiben der Schmiermittelpumpe mit der niedrigen Welle.

9. Verfahren nach einem der Ansprüche 6 bis 8, ferner umfassend:
Bereitstellen einer Entlüfteröffnung (230) an dem vorderen Abschnitt des Gasturbinenmotors (20); und
Entlüften von Luft von dem vorderen Abschnitt aus dem Gasturbinenmotor.

10. Verfahren nach einem der Ansprüche 6 bis 9, ferner umfassend:
Pumpen von Luft mit der Luftpumpe (80) durch den Wärmetauscher (100).

11. Verfahren nach einem der Ansprüche 6 bis 10, ferner umfassend Pumpen von Luft mit der Luftpumpe (80) um den vorderen Abschnitt des Gasturbinenmotors (20).

12. Verfahren nach Anspruch 11, ferner umfassend Antreiben der Luftpumpe (80) mit einer Motorwelle (82; 88), um Luft durch den Durchbruch (74) zu übertragen.

13. Verfahren nach Anspruch 12, ferner umfassend Antreiben der Luftpumpe (80) durch ein Planetenradgetriebe, das an die Motorwelle (82; 88) gekoppelt ist, vorzugsweise ferner umfassend:
Antreiben der Schmiermittelpumpe (220) mit der Luftpumpe.

## Revendications

1. Système de circulation de lubrifiant (200) pour un moteur à turbine à gaz (20) comprenant :
un cône de nez (66) ayant une ouverture (74) communiquant de l'air à un espace intérieur (72) du cône de nez ;
un échangeur de chaleur (100) disposé dans l'espace intérieur ;
une pompe à air (80) au moins partiellement disposée à l'intérieur du cône de nez et configurée pour communiquer l'air à travers l'échangeur de chaleur et
une voie de circulation de lubrifiant (210) adaptée pour être contenue à l'intérieur d'une partie avant (212) du moteur à turbine à gaz et configurée pour faire circuler du lubrifiant à travers l'échangeur de chaleur, la voie de circulation de lubrification comportant :
une conduite de récupération (228) ;
une pompe à lubrifiant (220), dans lequel la conduite de récupération fournit du lubrifiant à la pompe à lubrifiant ;
un filtre à lubrifiant (222), dans lequel le lubrifiant circule de la pompe à lubrifiant vers le filtre à lubrifiant avant de faire circuler le lubrifiant vers l'échangeur de chaleur ;
un collecteur de distribution de lubrifiant (224) configuré pour se trouver au niveau d'une extrémité avant d'une architecture à engrenages (48) qui comporte un ensemble palier avant (216) et un ensemble palier central (218), dans lequel le lubrifiant circule directement de l'échangeur de chaleur vers le collecteur de distribution de lubrifiant, et dans lequel le collecteur de distribution délivre du lubrifiant à l'architecture à engrenages ; et
un réservoir de lubrifiant (226), dans lequel lors de l'utilisation, le lubrifiant de l'architecture à engrenages s'accumule dans le réservoir de lubrifiant.

2. Système selon la revendication 1, comprenant en outre un compartiment de palier avant (214) configuré pour se trouver au niveau de la partie avant du moteur à turbine à gaz, dans lequel la voie de circulation de lubrifiant est configurée pour faire circuler du lubrifiant entre le compartiment de palier avant et l'échangeur de chaleur.

3. Système selon la revendication 1 ou 2, dans lequel la pompe à air (80) est en outre configurée pour communiquer de l'air autour de la partie avant du moteur à turbine à gaz.

4. Système selon la revendication 1 ou 2, dans lequel la pompe à air (80) est configurée pour être entraînée par un arbre bas (82) afin de communiquer l'air à travers l'ouverture.

5. Système selon la revendication 4, dans lequel la pompe à air (80) est configurée pour être entraînée à travers une boîte d'engrenage planétaire couplée à l'arbre bas, et dans lequel la pompe à lubrifiant (22) est entraînée par une rotation de la pompe à air.

6. Procédé (300) de circulation de lubrifiant dans un moteur à turbine à gaz (20) comprenant :
la fourniture (310) d'un cône de nez (66) ayant une ouverture (74) et un espace intérieur (72) ;
la fourniture (312) d'un échangeur de chaleur (100) dans l'espace intérieur ;
la fourniture d'une pompe à air (80) au moins partiellement disposée à l'intérieur du cône de nez qui est configurée pour communiquer l'air à travers l'échangeur de chaleur ;
la fourniture d'une voie de circulation de lubrifiant (210) contenue à l'intérieur d'une partie avant (212) du moteur à turbine à gaz qui est configurée pour faire circuler du lubrifiant à travers l'échangeur de chaleur, la voie de circulation de lubrifiant comportant :
une conduite de récupération (228) ;
une pompe à lubrifiant (220), dans lequel la conduite de récupération fournit du lubrifiant à la pompe à lubrifiant ;
un filtre à lubrifiant (222), dans lequel le lubrifiant circule de la pompe à lubrifiant vers le filtre à lubrifiant avant que le lubrifiant ne circule vers l'échangeur de chaleur ;
un collecteur de distribution de lubrifiant (224) au niveau d'une extrémité avant d'une architecture à engrenages (48) qui comporte un ensemble palier avant (216) et un ensemble palier central (218), dans lequel le lubrifiant circule de l'échangeur de chaleur directement vers le collecteur de distribution de lubrifiant, et dans lequel le collecteur de distribution délivre du lubrifiant à l'architecture à engrenages ; et
un réservoir de lubrifiant (226), dans lequel le lubrifiant provenant de l'architecture à engrenages s'accumule dans le réservoir de lubrifiant ;
la communication (316) de l'air à l'espace intérieur du cône de nez à travers l'ouverture ; et
la circulation (318) du lubrifiant à travers une voie de circulation de lubrifiant (210) entre l'échangeur de chaleur (100) et le réservoir de lubrifiant (226).

7. Procédé selon la revendication 6, comprenant en outre :
la fourniture d'un compartiment de palier avant (214) au niveau de la partie avant du moteur à turbine à gaz ; et
la circulation du lubrifiant dans la voie de circulation de lubrifiant (210) entre le compartiment de palier avant et l'échangeur de chaleur (100).

8. Procédé selon la revendication 6 ou 7, comprenant en outre :
le pompage du lubrifiant à travers la voie de circulation de lubrifiant (210) avec la pompe à lubrifiant (220), comprenant de préférence en outre :
la fourniture d'un arbre bas (82) dans le moteur à turbine à gaz (20) ; et
l'entraînement de la pompe à lubrifiant avec l'arbre bas.

9. Procédé selon l'une quelconque des revendications 6 à 8, comprenant en outre :
la fourniture d'un reniflard (230) au niveau de la partie avant du moteur à turbine à gaz (20) ; et
l'évacuation de l'air de la partie avant hors du moteur à turbine à gaz.

10. Procédé selon l'une quelconque des revendications 6 à 9, comprenant en outre :
le pompage d'air à travers l'échangeur de chaleur (100) avec la pompe à air (80).

11. Procédé selon l'une quelconque des revendications 6 à 10, comprenant en outre le pompage d'air autour de la partie avant du moteur à turbine à gaz (20) avec la pompe à air (80).

12. Procédé selon la revendication 11, comprenant en outre l'entraînement de la pompe à air (80) avec un arbre de moteur (82 ; 88) pour communiquer l'air à travers l'ouverture (74).

13. Procédé selon la revendication 12, comprenant en outre l'entraînement de la pompe à air (80) à travers une boîte d'engrenage planétaire couplée à l'arbre de moteur (82 ; 88), comprenant de préférence en outre :
l'entraînement de la pompe à lubrifiant (220) avec la pompe à air.
